Europäisches Patentamt

**European Patent Office**

**Office européen des brevets**

(19)

(11) Publication number: **0 055 586**
**A2**

(12) # EUROPEAN PATENT APPLICATION

(21) Application number: **81306033.2**

(22) Date of filing: **22.12.81**

(51) Int. Cl.³: **C 08 F 291/02**
**C 08 F 279/02, C 08 F 2/02**
**//(C08F291/02, 212/04),**
**(C08F279/02, 212/04)**

(30) Priority: **31.12.80 US 221697**

(43) Date of publication of application:
**07.07.82 Bulletin 82/27**

(84) Designated Contracting States:
**BE DE FR GB IT NL**

(71) Applicant: **MOBIL OIL CORPORATION**
**150 East 42nd Street**
**New York New York 10017(US)**

(72) Inventor: **Marien, Bruce Arthur**
**22 Wickham Lane**
**East Windsor New Jersey(US)**

(74) Representative: **Cooper, John Anthony et al,**
**Mobil Court 3 Clements Inn**
**London WC2A 2EB(GB)**

(54) Continuous bulk process for producing impact thermoplastics with controlled particle size.

(57) Particle size of rubber is controlled and minimized in a continuous bulk polymerization of impact resistant polymers obtained by the polymerization of vinyl-aromatic monomer and an elastomeric polymer by utilizing at least three distinct reaction zones comprising a slightly agitated pregrafting zone in which none or only a small amount of chain transfer agent is added; a prepolymerization zone in which shearing agitation takes place, the bulk of the chain transfer agent is added and phase inversion occurs; and a polymerization zone in which polymerization is completed under substantially static conditions.

EP 0 055 586 A2

Croydon Printing Company Ltd.

## CONTINUOUS BULK PROCESS FOR PRODUCING IMPACT THERMOPLASTICS WITH CONTROLLED PARTICLE SIZE

This application relates to a continuous bulk process for producing impact thermoplastics with controlled particle size.

The invention provides for a continuous process for the production of an impact resistant poly(vinyl-aromatic) polymer in the presence of a chain transfer agent comprising the steps of:

A.  continuously supplying a mixture of an elastomeric polymer and one or more monomers at least one of which is a vinyl-aromatic monomer to a pregrafting zone;

B.  partially polymerizing the mixture in the absence of or in the presence of a part of the chain transfer agent with sufficient agitation to effect heat transfer and to minimize shear until conversion is at a level below the phase inversion point;

C.  continuously withdrawing the partially polymerized mixture from the pregrafting zone into a stirred reaction prepolymerization zone; and

D.  adding the remainder of the chain transfer agent and further polymerizing the mixture under high agitation to effect phase inversion and the production of discrete rubber particles.

In a continuous bulk process for production of impact resistant polymers from vinyl-aromatic monomers and elastomeric polymers the rubber particle size is controlled to desirably small size by incremental addition of a chain transfer agent such as dodecyl mercaptan.  Polymerization is thermally initiated with minimal agitation in a pregrafter in which none or part of the chain transfer agent is added to achieve partial conversion short of phase inversion.  The product from the pregrafter is further polymerized in a stirred prepolymerization zone in which the remainder of the chain transfer agent is added, and in which phase inversion takes place.  Polymerization is completed in one or more subsequent zones.  The process enables the continuous production of a high impact material with a small rubber particle size on the order of 2 microns or less and in the size range obtained by batch methods but at a rate which
is significantly faster than with the batch process.

This invention relates to a continuous process for the
manufacture of an impact-resistant poly(vinyl-aromatic) compound by
the bulk polymerization of a vinyl-aromatic monomer in admixture with
an elastomeric polymer and in the optional presence of up to 20% by
weight of hydrocarbon diluent calculated on starting vinyl-aromatic
monomer, in which polymerization of the vinyl-aromatic monomer is
effected in a plurality of polymerization zones inter-connected in
series.  The several zones are referred to herein as the pregrafting
zone, the prepolymerization zone and one or more polymerization zones.

The pregrafting zone is a zone in which grafting of
vinyl-aromatic compound on the elastomer backbone polymer is begun.
Conditions are such that up to about 20 percent conversion is
obtained at temperatures in the range of 100 to 145°C with minimum
shear but sufficient agitation to effect heat transfer.  Low
agitation prior to phase inversion contributes to a product with
small particle size.

The product is continuously withdrawn from the pregrafting
zone and supplied to the prepolymerization zone in which polymerization is continued with shearing agitation at temperatures in the
range of 130° to 170°C until phase inversion occurs and conversion of
about 30% or more is achieved.  After phase inversion, the solution
of elastomeric polymer vinyl-aromatic monomer is the discontinuous
phase suspended in a solution of polyvinyl-aromatic compound in
vinyl-aromatic monomer.

Polymerization continues in one or more linear flow reactors
(LFR) under substantially static conditions at a temperature in the
range of 145° to 190°C.

An essential aspect of this invention is the mode of
addition of chain transfer agent which is typically an alkyl
mercaptan containing at least about 8 carbon atoms in the alkyl
group, such as tertiary dodecylmercaptan.  Only part, if any of the
chain transfer agent is introduced during the pregrafting step.

Typically, about 30 ppm to 250 ppm of chain transfer agent is used based on the total of vinyl-aromatic monomer and elastomer. No more than about 30% of that amount is added in the pregrafter, the remainder being introduced during the prepolymerization step. Preferably, no chain transfer agent is added to the pregrafter or only up to about 20% of the total used is introduced at that point.

Examples of vinyl-aromatic monomers which can be used in the novel process are styrene and nuclear substituted styrenes, for example nuclear alkylated, halogenated and/or nitrated styrenes. Specific examples are o-, and p-methyl styrene, vinylxylenes, isopropylstyrenes, ethylvinylbenzenes, p-chlorostyrene, 2,4-dichlorostyrene, o-, m-, and p-bromostyrene, o-, m-, and p-fluorostyrene and p-nitrostyrene. The preferred monomer is styrene. The vinyl-aromatic monomers can comprise the sole monomer, or mixtures of two or more of these monomers may be polymerized. Suitable monomers do not contain any nuclear-substituent which would interfere with the polymerization. Compounds containing small amounts of more than one vinyl or vinylidene group, such as divinylbenzene, are tolerated.

The vinyl-aromatic monomer(s) can be copolymerized with a vinylidene-aromatic monomer, for example, alpha-methylstyrene, alpha-ethylstyrene and p-methylalpha-methylstyrene, and/or with another ethylenically unsaturated monomer copolymerizable with a vinyl-aromatic monomer, for example, acrylic acid, methacrylic acid, acrylonitrile, methacrylonitrile, maleic anhydride and the (cyclo)alkyl esters of these three acids containing one (for cycloalkyl three) to eighteen carbon atoms in the (cyclo)alkyl group, such as butyl acrylate, 2-ethylhexyl acrylate, cyclohexyl acrylate, methyl methacrylate and butyl methacrylate.

The elastomeric polymer can be a natural or a synthetic rubber. Examples of synthetic rubbers are polydiene elastomers, for example, of conjugated 1,3-dienes having four, five or six carbon atoms per molecule, such as butadiene and isoprene.

F-0836                          -4-

        While any polybutadiene rubber, for example, a rubber of the
kind known under the trade designation "Plioflex 5000-S" can be used
in carrying out the novel process, the stereoregular
cis-polybutadiene rubbers, in particular those with a cis-1,4 content
of greater than 20% may be preferred.  Examples of such stereoregular
cis-polybutadiene rubbers are the so-called medium cis-1,4 rubbers,
i.e., polybutadiene rubbers with a medium cis-1,4 content, for
example, the rubbers known under the trade designations "Diene 35"
and "Diene 55NF" which have cis-1,4 contents of about 40% and the
so-called high cis-1,4 rubbers, i.e., polybutadiene rubbers with a
high cis-1,4 content, for example, the polybutadiene rubber known
under the trade designation "Taktene" 1202 which has a cis-1,4
content greater than 90% and the polybutadiene rubber known under the
trade designation "Cariflex" BR which has a cis-1,4 content of
greater than 96%.  However, the use of low cis-1,4 polybutadiene
rubbers in carrying out the present invention is not excluded.
Copolymers of these conjugated 1,3-dienes may be used, for example,
those derived from styrene, acrylonitrile and alkyl esters of acrylic
acid and methacrylic acid having from one to eighteen carbon atoms
per alkyl group.  Other examples of synthetic rubbers are block
copolymers containing a polydiene or hydrogenated polydiene block in
its molecular structure, for example, a styrene-butadiene- styrene
block copolymer rubber.  Again other examples are elastomers obtained
by polymerization of cyclopentene; by copolymerization of ethylene
and propene and of isobutene with isoprene (butyl rubber); by
polymerization of 2-chlorol,3-butadiene(neoprene); polysulfide
polymers prepared by reaction of a suitable organic dihalide with an
aqueous solution of sodium polysulfide; acrylic polymers, for
example, based on ethyl and/or butyl acrylate; silicone elastomers;
elastomers made by the chlorosulphonation of polyethylene (the
so-called "HYPALON" synthetic rubbers); fluorocarbon elastomers;
polyurethane elastomers.  Mixtures of the said elastomeric polymers
may be applied.  Preferred mixtures are mixtures of polybutadiene and
polyisoprene.  The preferred rubbers are the polybutadiene and butadiene/styrene copolymers; the medium and high cis polybutadienes are most preferred.

The concentration of elastomeric polymer in the vinyl-aromatic monomer fed to the pregrafting zone is usually between 1 and about 15%, calculated on the total feed, preferably between about 1 and about 10% and most preferably between about 2 and about 8%.

A hydrocarbon diluent can be used and can be added to the starting mixture fed to the pregrafting zone. A suitable diluent is a non-polymerizable cycloaliphatic or aromatic hydrocarbon having a boiling point below that of the vinyl-aromatic monomer. Examples of such diluents are benzene, toluene, o-, and p-xylene, ethylbenzene and cyclohexane and mixtures of any of these hydrocarbons, in any ratio. The preferred diluents are toluene and ethyl benzene, the latter being the most preferred. The amount of diluent used will depend on the polymerization temperature, the degree of crosslinking and conversion to be adopted and can be between, for example, about 1% and about 20% preferably between about 2% and about 15% by weight, calculated on starting vinyl-aromatic monomer and the elastomeric polymer. Any residual diluent which remains in the reaction mixture fed to the final polymerization reactor can be removed, together with any residual monomer, for example, in a devolatilizing extruder, a wiped film evaporator or a falling strand devolatizer, in which the ultimate polymer product is converted into solid, particulate form having less the 0.5 weight percent monomer plus diluent by extruder or melt pumps for supply to end-users.

Conventional additives such as mineral oil and antioxidants can be introduced at the appropriate stages.

The invention is illustrated by the following non-limiting examples.

## EXAMPLE 1

A 10% solution of polybutadiene in styrene and 10% ethylbenzene including 120 ppm tertiarydodecylmercaptan was charged to a dissolving tank. The mixture was pumped at 300 ml/hr into the first vessel (pregrafter) which was maintained at 130°C and stirred at 120 rpm, and polymerization was conducted until just less than 10%.

Conversion of the monomer was obtained. The partially converted polymerizate was withdrawn at the same rate and added to the second reactor which was held at 130°C and 250 rpm until greater than 30% conversion of monomer was achieved. The level of tertiary dodecylmercaptan was increased to 160 ppm by its continuous addition to the flow from the pregrafter. The polymerizate was continuously removed and polymerization was completed in a static tubular reactor at 130° to 190°C for six hours.

## EXAMPLE 2

Example 1 was repeated except only one polymerization vessel was used and the tertiary dodecylmercaptan level was held at 160 ppm for the entire run which was conducted at 130°C at 250 rpm to achieve greater than 30% conversion. The products of Examples 1 and 2 are compared in Table 1 below against the product obtained by a typical batch process as to mean rubber particle size (RPS) and range of particle size.

F-0836                    -7-

## TABLE 1

| EXAMPLE | MEAN RPS (Microns) | PARTICLE SIZE RANGE (Microns) |
|---|---|---|
| Batch | 0.8 | 0.2 - 1.2 |
| 1 | 1.0 | 0.3 - 2.3 |
| 2 | 2.4 | 0.3 - 5.2 |

## EXAMPLE 3

In a manner similar to Example 2 graft polymerization was
conducted and the proportion of tertiary dodecylmercaptan (tDDM)
addition was varied between the pregrafter and prepolymerizer as
shown in Table 2. The results show that particle size can be
controlled with tDDM additions in the pregrafter. With no tDDM in
the first vessel, very small particles are obtained. The particle
size then increases with increasing tDDM levels prior to phase
inversion. Additions to the second vessel serve to control the
viscosity of the polymerizate and ultimate product.

TABLE 2

| RUN | [tDDM] Pregrafter | [tDDM] Prepolymerizer | Average Rubber Particle Size (Microns) |
|-----|-------------------|------------------------|-----------------------------------------|
| 1   | 0.0000            | 0.0000                 | > 0.5                                   |
| 2   | 0.0000            | 0.0080                 | > 0.5                                   |
| 3   | 0.0000            | 0.0160                 | > 0.5                                   |
| 4   | 0.0080            | 0.0160                 | 0.5-2.0                                 |
| 5   | 0.0160            | 0.0160                 | 1.5-4.0                                 |

CLAIMS:

1.   A continuous process for the production of an impact resistant poly(vinyl-aromatic) polymer in the presence of a chain transfer agent comprising the steps of:

A.   continuously supplying a mixture of an elastomeric polymer and one or more monomers at least one of which is a vinyl-aromatic monomer to a pregrafting zone;

B.   partially polymerizing the mixture in the absence of or in the presence of a part of the chain transfer agent with sufficient agitation to effect heat transfer and to minimize shear until conversion is at a level below the phase inversion point;

C.   continuously withdrawing the partially polymerized mixture from the pregrafting zone into a stirred reaction prepolymerization zone; and

D.   adding the remainder of the chain transfer agent and further polymerizing the mixture under high agitation to effect phase inversion and the production of discrete rubber particles.

2.   The process of Claim 1 in which the vinyl-aromatic monomer comprises styrene.

3.   The process of Claim 1 in which the vinyl-aromatic monomer comprises para-methyl styrene.

4.   The process of any one of Claims 1 through 3 in which a monomer in addition to the vinyl aromatic monomer is supplied to the pregrafting zone.

5.   The process of any preceding Claim in which acrylonitrile and a vinyl aromatic monomer are supplied to the pregrafting zone.

6.    The process of any preceding Claim in which the chain transfer agent is an alkyl thiol having at least 8 carbon atoms.

7.    The process of any preceding Claim in which the chain transfer agent is tertiary dodecyl mercaptan.

8.    The process of any preceding Claim in which conversion in the pregrafting zone is no more than 20%.

9.    The process of any preceding Claim in which conversion in the pregrafting zone is no more than 10%.

10.    The process of any preceding Claim in which polymerization is completed by further polymerization in a static tubular reactor.

11.    The process of any preceding Claim in which from 0 to 20% of the total of chain transfer agent used is added to the pregrafting zone.

5393N